# DEMANDE DE BREVET EUROPEEN

(11) **EP 2 915 740 A1**
(43) Date de publication de la demande: **09.09.2015**
(21) Numéro de dépôt: 15157829.1
(22) Date de dépôt: 05.03.2015
(51) Int. Cl.: B64C 1/18, B64F 5/00

(54) **Dispositif de positionnement relatif de deux pièces d'aéronef telles qu'une traverse et un cadre de fuselage**

(30) Priorité: 07.03.2014 FR 1451861
(71) Demandeur: AIRBUS OPERATIONS (SAS), 31060 Toulouse (FR)
(72) Inventeur: Durand, Yves, 31840 AUSSONNE (FR); Guering, Bernard, 31850 MONTRABE (FR)
(74) Mandataire: Petit, Maxime

(57) **Abrégé**

L'invention concerne un dispositif (20) de positionnement d'une première pièce (T) relativement à une deuxième pièce (C). La première pièce comporte une extrémité libre (12) avec un premier alésage (a1) et la deuxième pièce comporte une partie d'accrochage (14) avec un deuxième alésage (a3) destiné à venir en correspondance avec le premier alésage. Le premier et le deuxième alésage sont percés à leur diamètre définitif préalablement à leur positionnement relatif. Le dispositif comporte un ou plusieurs éléments de positionnement (22, 24, 27-29) qui sont aptes à positionner, suivant au moins un des trois axes géométriques, le premier alésage (a1) relativement au deuxième alésage (a3).

## Description

### DOMAINE DE L'INVENTION

L'invention concerne un ensemble comprenant une première pièce d'aéronef et une deuxième pièce d'aéronef ainsi qu'un dispositif de positionnement de la première pièce relativement à la deuxième pièce.

### ART ANTERIEUR

Dans le secteur aéronautique, l'assemblage des traverses (les traverses constituent la partie structurale d'un plancher de l'aéronef) à des cadres qui constituent la structure primaire du fuselage doit être réalisé de manière précise. Chaque traverse qui est généralement d'une grande longueur (plusieurs mètres) est amenée en correspondance, par l'intermédiaire de ses deux extrémités opposées, respectivement avec deux points opposés de la périphérie interne de chaque cadre. Les extrémités opposées de la traverse et les points de fixation respectifs du cadre, qui sont généralement pré-percés avant leur mise en correspondance, sont alors percés définitivement et assemblés in-situ.

Lorsque des équipements parfois sensibles (car intégrant des composants électroniques et des éléments électriques) ont déjà été amenés à l'intérieur de la structure primaire de fuselage, les opérations de perçage qui sont réalisées ultérieurement génèrent des copeaux, de la poussière qui sont susceptibles de polluer ces équipements.

Il serait donc utile de pouvoir remédier à ce problème.

### RESUME DE L'INVENTION

La présente invention a ainsi pour objet, selon un aspect, un ensemble comprenant une première pièce d'aéronef (T) et une deuxième pièce d'aéronef (C) et un dispositif de positionnement de la première pièce relativement à la deuxième pièce, la première pièce comportant une extrémité libre pourvue d'au moins un premier alésage (a1,a2) et la deuxième pièce comportant une partie d'accrochage pourvue d'au moins un deuxième alésage (a3) destiné à venir en correspondance avec ledit au moins un premier alésage, caractérisé en ce que , le dispositif comporte au moins un élément de positionnement mécanique servant de repère géométrique lors d'un déplacement relatif desdits au moins un premier et deuxième alésages percés à leurs diamètres définitifs afin de positionner, suivant au moins un parmi un premier, un deuxième et un troisième axes géométriques, ledit au moins un premier alésage relativement audit au moins un deuxième alésage. Les alésages ayant été préalablement percés à leur diamètre définitif ils ne requièrent plus de perçage supplémentaire. Ceci simplifie les opérations ultérieures qui peuvent avoir lieu dans un environnement qu'il est préférable de ne pas polluer et qui est par ailleurs encombré. Un positionnement précis des alésages l'un par rapport à l'autre est alors nécessaire puisque les pièces sont déjà aux dimensions finales de l'assemblage. Le positionnement des alésages a lieu selon au moins un axe géométrique, de manière simple, grâce audit au moins un élément de positionnement mécanique qui sert de repère géométrique lors du déplacement d'une pièce relativement à l'autre afin d'amener en correspondance (ex : centrage) les alésages suivant ledit au moins un axe géométrique. Ceci peut, dans certaines circonstances, permettre de façon simultanée ou quasi-simultanée le positionnement selon deux axes géométriques, voire les trois.

Selon d'autres caractéristiques possibles prises isolément ou en combinaison l'une avec l'autre :
- ledit au moins un élément de positionnement est associé de manière permanente ou temporaire à l'une des première et deuxième pièces ;
- ledit au moins un élément de positionnement ne participe pas aux fonctionnalités des première et deuxième pièces;
- ledit au moins un élément de positionnement n'est pas disposé en vis-à-vis ou à l'intérieur desdits au moins un premier et deuxième alésages ;
- le premier axe géométrique est parallèle à l'axe desdits au moins premier et deuxième alésages ;
- ledit au moins un élément de positionnement comprend un élément de centrage suivant le premier axe de la première pièce relativement à la deuxième pièce ;
- l'élément de centrage est disposé au-dessus de la partie d'accrochage de la deuxième pièce ;
- l'élément de centrage est un patin, par exemple amovible, dont la portion supérieure forme un coin ;
- ledit au moins un élément de positionnement comprend un élément de centrage suivant le deuxième axe géométrique (Z) dudit au moins un premier alésage relativement audit au moins un deuxième alésage ;
- l'élément de centrage est disposé en-dessous de la partie d'accrochage de la deuxième pièce ;
- l'élément de centrage est une cale, par exemple amovible ;
- l'ensemble comprend un outil de positionnement de la première pièce relativement à la deuxième pièce ;
- l'outil de positionnement comprend des premiers organes de préhension qui sont aptes à être verrouillés sur l'une des pièces, des deuxièmes organes de préhension qui sont aptes à être verrouillés sur l'autre pièce, lesdits premiers organes de préhension étant aptes à se déplacer relativement auxdits deuxièmes organes de préhension suivant ledit au moins un axe géométrique.
- l'outil comprend une tête munie des premiers et deuxièmes organes de préhension et des moyens d'entrainement en mouvement suivant ledit au moins un axe géométrique desdits premiers organes de préhension relativement auxdits deuxièmes organes de préhension.- ledit au moins un élément de positionnement comprend plusieurs éléments servant de repères géométriques disposés sur la première pièce et sur la deuxième pièce et qui sont destinés à être alignés les uns avec les autres suivant le deuxième axe géométrique (Z) et/ou le troisième axe géométrique (Y) ;
- ledit au moins un outil est apte à amener le ou les repères géométriques d'une pièce en alignement avec le ou les repères géométriques de l'autre pièce suivant le deuxième axe géométrique (Z) et/ou le troisième axe géométrique ;
- ledit au moins un élément de positionnement dudit au moins un premier alésage relativement audit au moins un deuxième alésage, suivant le premier axe géométrique ou le deuxième axe géométrique, est disposé sur au moins une des deux pièces ;
- le dispositif de positionnement comprend en outre :
- au moins un organe actif disposé sur une pièce,
- au moins un organe passif disposé sur l'autre pièce et qui est apte à coopérer avec ledit au moins un organe actif par transmission et réception d'ondes électromagnétiques,
- un système de pilotage en boucle fermée qui est apte à piloter les ondes électromagnétiques transmises et le déplacement d'au moins une pièce par rapport à l'autre en fonction des ondes reçues par ledit au moins un organe passif de manière à amener en correspondance géométrique lesdits au moins un organe actif et passif ;
- le dispositif de positionnement comprend plusieurs éléments servant de repères géométriques disposés sur la première pièce et sur la deuxième pièce et qui sont destinés à être alignés les uns avec les autres suivant le premier axe géométrique (X) et/ou le deuxième axe géométrique (Z) et/ou le troisième axe géométrique (Y).
- le premier et le troisième axe géométrique sont disposés dans le plan horizontal et le deuxième axe géométrique est l'axe vertical ;
- la première pièce est une traverse et la deuxième pièce est un cadre ;
- la traverse est destinée à être fixée en deux points diamétralement opposés de la périphérie interne du cadre respectivement par l'intermédiaire de ses deux extrémités opposées dont l'une est l'extrémité libre non encore fixée de la traverse et l'autre est l'extrémité opposée déjà fixée en un point du cadre ;
- le dispositif comprend des moyens de mise en compression du cadre qui sont aptes à exercer un effort de compression sur le cadre de manière à rapprocher l'un de l'autre les deux points diamétralement opposés de la périphérie interne du cadre ;
- l'extrémité libre de la traverse comprend une chape alignée dans l'axe longitudinal de la traverse et la partie d'accrochage forme un tenon disposé sur la périphérie interne du cadre.

L'invention a également pour objet, selon un autre aspect, un aéronef, caractérisé en ce qu'il comprend au moins un ensemble tel que brièvement exposé ci-dessus.

L'invention a pour objet, selon encore un autre aspect, un procédé de positionnement d'une première pièce d'aéronef (T) relativement à une deuxième pièce d'aéronef (C), la première pièce comportant une extrémité libre pourvue d'au moins un premier alésage (a1, a2) et la deuxième pièce comportant une partie d'accrochage pourvue d'au moins un deuxième alésage (a3) destiné à venir en correspondance avec ledit au moins un premier alésage, caractérisé en ce que ledit au moins un premier alésage et ledit au moins un deuxième alésage sont percés à leur diamètre définitif préalablement à leur positionnement relatif, le procédé comprenant une étape de déplacement relatif desdits au moins un premier et deuxième alésages et de positionnement, suivant au moins un des trois axes géométriques, dudit au moins un premier alésage relativement audit au moins un deuxième alésage par l'intermédiaire d'au moins un élément de positionnement mécanique qui sert de repère géométrique entre lesdits au moins un premier et deuxième alésages lors du déplacement relatif.

Le procédé peut également comporter au moins certaines des caractéristiques possibles présentées ci-dessus en relation avec l'ensemble de positionnement.

### BREVE DESCRIPTION DES DESSINS

D'autres caractéristiques et avantages apparaitront au cours de la description qui va suivre, donnée uniquement à titre d'exemple non limitatif et faite en référence aux dessins annexés, sur lesquels :
- la figure 1 est une vue générale en perspective d'un ensemble selon un mode de réalisation de l'invention ;
- la figure 2 est une vue de côté de l'ensemble de la figure 1 ;
- les figures 3 à 5 illustrent le montage d'une extrémité libre d'une traverse à un cadre de fuselage ;
- les figures 6 à 8 illustrent le positionnement de l'extrémité libre opposée de la traverse des figures 3 à 5 relativement au cadre, suivant un premier axe géométrique X, selon un mode de réalisation;
- les figures 9 et 10 illustrent le positionnement de l'extrémité libre opposée de la traverse des figures 3 à 5 relativement au cadre, suivant un deuxième axe géométrique Z, selon un mode de réalisation;
- les figures 11 à 13 illustrent le positionnement de l'extrémité libre opposée de la traverse des figures 3 à 5 relativement au cadre, suivant un troisième axe géométrique Y, selon un mode de réalisation ;
- la figure 14 est vue schématique en coupe dans un plan longitudinal horizontal de l'extrémité libre opposée de la traverse assemblée à la partie d'accrochage du cadre ;
- la figure 15 est une vue schématique en perspective d'une structure primaire de fuselage d'aéronef comprenant des traverses fixées à des cadres de fuselage ;
- les figures 16 à 19 illustrent le positionnement de l'extrémité libre opposée de la traverse des figures 3 à 5 relativement au cadre, suivant le deuxième z et troisième axe géométrique y selon un autre mode de réalisation.

### DESCRIPTION DETAILLEE

La présente invention s'applique notamment en aéronautique au positionnement d'une première pièce telle qu'une traverse d'aéronef (destinée à former, conjointement avec d'autres traverses, la partie structurale d'un plancher d'un aéronef) par rapport à une deuxième pièce fixe telle qu'un cadre d'une structure primaire de fuselage d'aéronef, appelé ci-après cadre de fuselage.

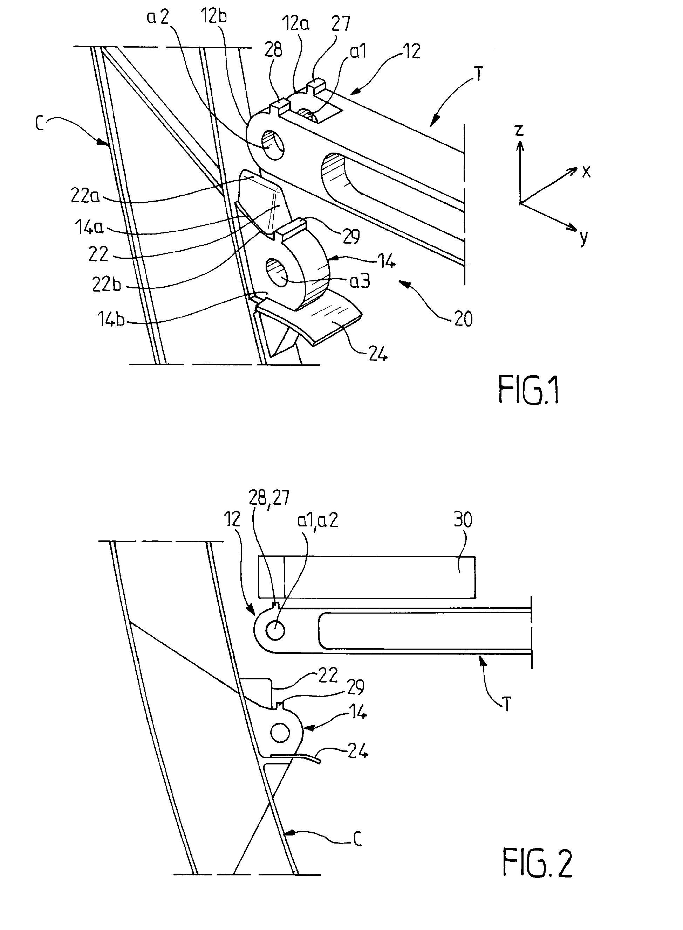

La figure 1 illustre de manière agrandie et partielle :
- une traverse T qui comporte une extrémité libre 12 pourvue d'au moins un premier alésage,
- un cadre de fuselage C qui comporte une partie d'accrochage ou de fixation 14 pourvue d'au moins un deuxième alésage.

L'extrémité libre 12 de la traverse (tout comme son extrémité opposée non visible sur la figure 1) est configurée en forme de chape alignée dans la direction d'extension longitudinale de la traverse. L'extrémité libre 12 de la traverse comprend un alésage qui est percé dans chacun des deux bras parallèles 12a, 12b de la chape. Les deux premiers alésages a1, a2 sont alignés suivant un seul axe qui est perpendiculaire à la direction d'extension longitudinale de la traverse T.

La partie d'accrochage 14 est aménagée sur le bord périphérique intérieur du cadre C et est configurée sous la forme d'un tenon qui s'étend radialement vers l'intérieur du cadre. Le tenon 14 est percé d'un deuxième alésage a3 perpendiculaire au plan dans lequel s'étend le cadre C.

Les alésages a1, a2, a3 sont percés dans les pièces avant leur mise en place dans la structure primaire de fuselage. Ces alésages ont déjà le diamètre définitif requis pour l'assemblage ultérieur des pièces et ne nécessitent donc pas d'opération supplémentaire de perçage ou de rectification.

Le positionnement des pièces dont les dimensions sont définitives doit donc être précis pour qu'elles puissent être assemblées. Cette tâche est d'autant plus compliquée/délicate que les traverses sont de longues pièces.

Dans la position illustrée à la figure 1, l'extrémité libre 12 de la traverse est disposée à proximité de la partie d'accrochage 14 du cadre, au-dessus de celle-ci, en vue du positionnement relatif des pièces.

Un dispositif 20 de positionnement de la traverse T relativement au cadre C est utilisé afin de mettre en correspondance géométrique (alignement) de façon très précise (à quelques dixièmes de millimètres près), les deux premiers alésages a1 et a2 avec le deuxième alésage a3.

Le dispositif de positionnement 20 assure le positionnement relatif suivant trois axes géométriques, à savoir un premier axe géométrique X (axe horizontal), un deuxième axe géométrique Z (axe vertical) et un troisième axe géométrique Y (axe horizontal). Les axes Z et Y sont contenus dans le plan du cadre et sont perpendiculaires aux axes des alésages a1, a2 et a3, tandis que l'axe X est parallèle auxdits axes des alésages.

Le dispositif 20 comprend :
- un premier élément 22 de positionnement des deux premiers alésages a1, a2 par rapport au deuxième alésage a3 suivant le premier axe géométrique X ;
- des moyens 24, 27, 28, 29 de positionnement des deux premiers alésages a1, a2 par rapport au deuxième alésage a3 suivant le deuxième axe (Z) et le troisième axe géométrique (Y).

Le premier élément de positionnement 22 a pour fonction d'assurer le centrage de la traverse, et donc des deux premiers alésages a1, a2, relativement au cadre, et donc au deuxième alésage a3.

Le premier élément 22 est aménagé, par exemple de façon amovible, au-dessus du tenon 14 afin de venir en contact de façon privilégiée avec l'extrémité libre 12 de la traverse qui est généralement amenée par le dessus.

Le premier élément de centrage 22 est, par exemple, une pièce rapportée (ex. patin) ayant une forme de coin 22a dans sa portion supérieure qui est destinée à coopérer avec l'extrémité libre de la traverse. La portion inférieure 22b ou base du patin 22 est élargie afin d'avoir une meilleure assise sur la portion supérieure 14a du tenon 14.

Le patin est, par exemple, collé au tenon.

Les moyens de positionnement précités comprennent plus particulièrement un deuxième élément de positionnement 24 qui est apte à positionner/centrer suivant le deuxième axe Z les deux premiers alésages a1, a2(déjà positionnés suivant le premier axe X) relativement au deuxième alésage a3 .

Ce deuxième élément de positionnement 24 est disposé, par exemple de façon amovible, en dessous du tenon 14 afin de servir de butée verticale à l'extrémité libre 12 de la traverse.

Le deuxième élément 24 est par exemple une cale qui est montée dans la portion 14b du tenon située sous l'alésage a3. La cale a, par exemple, une forme de U dont l'ouverture vient s'engager sur la portion inférieure précitée 14b du tenon et les deux branches du U encadrent ainsi cette portion.

Les moyens de positionnement comprennent également plusieurs repères géométriques disposés, pour partie sur l'extrémité libre 12 et, pour partie sur le tenon 14. Ces repères géométriques sont destinés à être alignés les uns avec les autres suivant le troisième axe Y dès lors que les premiers alésages a1 et a2 et le troisième alésage a3 ont été positionnés les uns par rapport aux autres suivant le premier axe X et le deuxième axe Z. L'alignement des repères géométriques avec le troisième axe Y assure le positionnement relatif/centrage des alésages a1, a2, a3 suivant cet axe.

Les repères géométriques prennent par exemple la forme d'ergots dont deux 27, 28 sont formés respectivement sur la face supérieure de chacun des deux bras 12a, 12b de l'extrémité libre (de part et d'autre de l'échancrure ménagée entre ces bras), à la verticale de l'axe central des alésages a1 et a2.

Un troisième ergot 29 est formé sur la portion supérieure du tenon, à la verticale de l'axe central de l'alésage a3. Le patin 22 est positionné en retrait par rapport à l'ergot 29, entre ce dernier et le bord périphérique interne du cadre auquel il est adossé.

Comme illustré sur la figure 2, le dispositif de positionnement comprend en outre un outil de positionnement 30 qui est positionné au-dessus de l'extrémité libre 12 de la traverse. Cet outil est apte, sur commande, à amener les repères géométriques 28, 27 et 29 en correspondance géométrique ou en alignement suivant le troisième axe Y.

L'outil 30 est, par exemple, une pince de réajustement des ergots qui peut être de type hydraulique, électrique, manuelle, selon la valeur de l'effort de réajustement à exercer.

L'outil est en outre muni, de façon optionnelle, d'un limiteur d'effort afin de sécuriser les pièces.

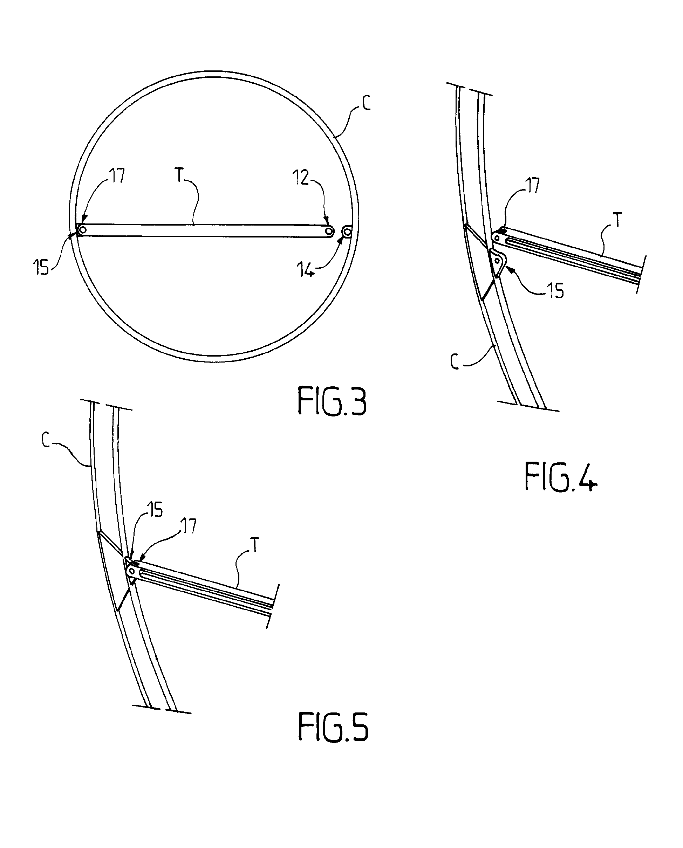

On va maintenant décrire en référence aux figures 3 à 15 un procédé de positionnement de la traverse T relativement au cadre C et son assemblage avec celui-ci.

Comme représenté à la figure 3 (section transversale d'une structure primaire de fuselage d'aéronef), la traverse T est d'abord fixée à une partie d'accrochage ou de fixation 15 du cadre C (identique à la partie d'accrochage 14). Pour ce faire, on amène par le dessus (figure 4) l'extrémité libre 17 en forme de chape de la traverse (identique à l'extrémité 12) et on l'abaisse pour introduire la partie saillante 15 du cadre dans l'échancrure ménagée entre les bras écartés de la chape 17.

Une fois ainsi positionnées (figure 5), l'extrémité libre 17 et la partie 15 sont assemblées par par boulonnage dans les alésages en correspondance des deux pièces. La figure 3 illustre la traverse T fixée à une seule 17 de ses extrémités tandis que l'autre extrémité 12 opposée libre est en attente de positionnement et d'assemblage avec la partie 14 du cadre. L'écart entre l'extrémité 12 et la partie 14 du cadre a été volontairement exagéré pour les besoins de l'illustration. En pratique le décalage est de l'ordre de quelques millimètres.

Le positionnement de l'extrémité libre 12 de la traverse relativement à la partie d'accrochage 14 du cadre fait appel au dispositif de positionnement 20 décrit en référence aux figures 1 et 2.

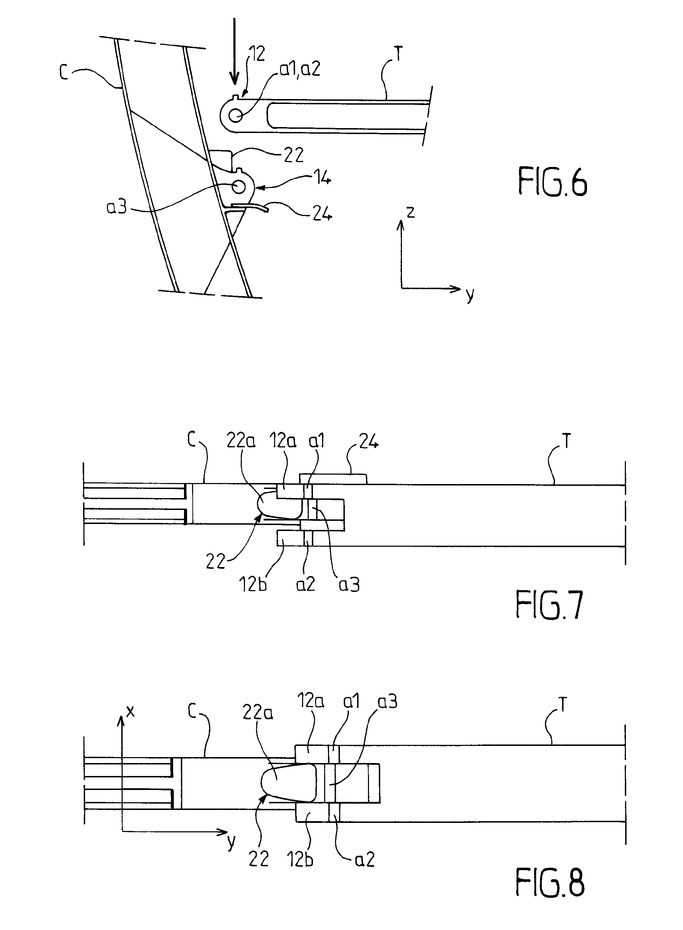

Les figures 6 à 8 illustrent successivement le positionnement de l'extrémité libre 12 (chape) relativement à la partie d'accrochage 14 (tenon) suivant le premier axe géométrique X.

L'extrémité libre 12 est amenée au-dessus de la partie d'accrochage 14 et est descendue verticalement (manuellement ou avec un engin de levage/descente) de manière à ce que la chape entre en contact avec le premier élément de positionnement 22. Comme illustré sur la figure 7, l'un des deux bras 12a, 12b de la chape touche l'un des bords en pente du coin supérieur 22a du patin et glisse sur ce dernier au fur et à mesure que la traverse descend. Ceci a pour effet de positionner les deux bras 12a, 12b de la chape de part et d'autre du patin, centrant ainsi celle-ci sur le patin (figure 8).

Les premiers alésages a1 et a2 sont ainsi positionnés relativement au deuxième alésage a3 suivant le premier axe X.

Sur les figures 7 et 8, le défaut de positionnement des alésages selon le troisième axe Y est apparent (le défaut de positionnement selon le deuxième axe Z est également présent mais non visible).

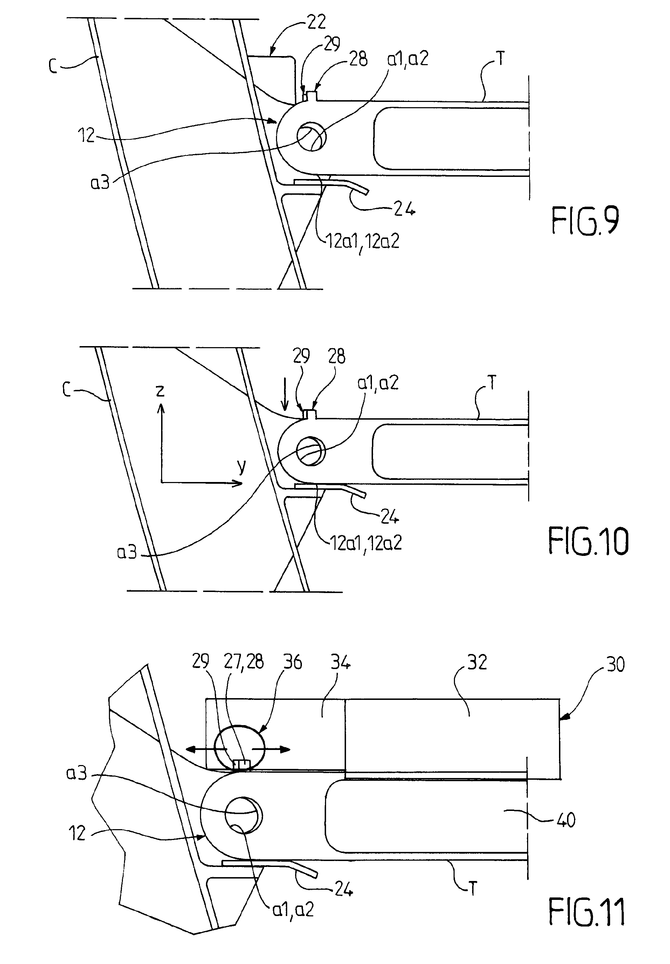

Les figures 9 et 10 illustrent successivement le positionnement de l'extrémité libre 12 relativement à la partie d'accrochage 14 suivant le deuxième axe géométrique Z.

Dans l'exemple décrit l'extrémité libre 12 a déjà été positionnée relativement à la pièce 14 suivant le premier axe X.

Le défaut de positionnement relatif des alésages a1, a2, d'une part, et de l'alésage a3, d'autre part, selon les deux axes Z et Y est apparent sur la figure 9.

La traverse T poursuit sa descente jusqu'à ce que la face inférieure 12a1, 12b1 des bras de la chape entre en contact avec le deuxième élément de positionnement 24 (cale), notamment avec les branches du U que forme la cale. Ce deuxième élément 24 forme ainsi une butée suivant le deuxième axe Z (figure 10).

Dans la position illustrée sur la figure 10, les alésages a1, a2 et a3 ont été positionnés de manière relative entre eux suivant le deuxième axe Z.

Seul subsiste encore le défaut de positionnement selon le troisième axe Y.

On notera que le premier élément de positionnement 22a, par exemple, été démonté dès lors que l'extrémité libre 12 de la traverse est descendue en dessous de l'altitude de cet élément (figures 9 et 10).

Les figures 11 à 13 illustrent successivement le positionnement de l'extrémité libre 12 relativement à la partie d'accrochage suivant le troisième et dernier axe géométrique Y (cet axe correspond à l'axe longitudinal de la traverse).

Cette dernière étape de positionnement est mise en oeuvre par l'outil 30 de la figure 2 qui est, par exemple, une pince bridée sur la traverse, par exemple sur les deux flancs longitudinaux évidés de celle-ci. Le corps 32 de l'outil est monté de manière verrouillée sur les bords longitudinaux supérieurs des flancs dont le flanc, noté 40, représenté sur la figure 11.

La tête 34 de l'outil comprend des organes de préhension 36 qui sont aptes à se verrouiller sur les deux ergots 27, 28, d'une part, et l'ergot 29, d'autre part, et à se déplacer l'un par rapport à l'autre afin d'amener les ergots 27, 28 en alignement (selon l'axe X) avec l'ergot 29.

De manière non représentée sur les figures, les organes de préhension 36 comprennent, d'une part, un ou des premiers organes de préhension qui sont aptes à se verrouiller sur les deux ergots 27, 28 et, d'autre part, un ou des deuxièmes organes de préhension qui sont aptes à se verrouiller sur l'ergot 29. Les premiers organes sont aptes à se déplacer relativement aux deuxièmes organes (ou inversement) suivant l'axe Y par l'intermédiaire de moyens d'entrainement (moteur...) intégrés à l'outil, par exemple au corps 32 de ce dernier, et commandés (par une commande externe sur l'outil ou à distance) pour entrainer en mouvement les premiers organes relativement aux deuxièmes organes (ou inversement) suivant l'axe Y.

En pratique, l'outil exerce une traction suivant l'axe Y sur l'ergot 29 pour l'amener en correspondance géométrique avec les ergots 27 et 28, réalisant ainsi une mise en compression du cadre C illustré à la figure 3 (le cadre possède une certaine flexibilité dans son plan de par sa conception et en raison du fait qu'il est adapté à résister aux efforts dûs à la pressurisation de la cabine d'aéronef en vol).

Les ergots 27, 28 sont centrés (par conception) de façon précise sur un axe vertical qui passe par le centre de chacun des deux premiers alésages a1, a2.

L'ergot 29, pour sa part, est centré (par conception) de façon précise sur un axe vertical qui passe par le centre du deuxième alésage a3.

Compte tenu de cet agencement, l'alignement des trois ergots 27 à 29 assure le positionnement des trois alésages l'un par rapport à l'autre suivant le troisième axe Y.

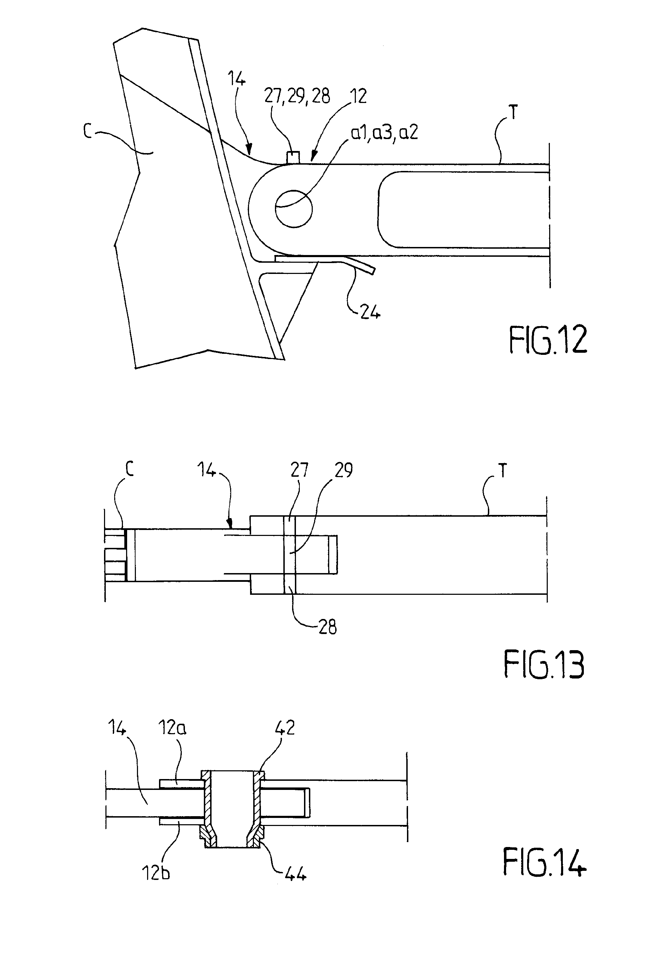

Les figures 12 et 13 illustrent respectivement en vue de côté et de dessus le positionnement final relatif des alésages suivant les trois axes géométriques X, Z et Y.

Avec un tel positionnement les alésages sont en correspondance géométrique les uns avec les autres dans une zone de tolérance donnée, par exemple à quelques dixièmes de millimètres près. Une vis du type à embout conique 42 (figure 14) est ensuite insérée dans les alésages afin de parfaire le centrage desdits alésages entre eux.

Cette vis 42 est par exemple mise en place par un outil de traction qui prend appui sur la face intérieure du corps creux de la vis.

Un écrou 44 est ensuite monté sur l'extrémité débouchante de la vis 42 qui est située à l'opposé de la tête de ladite vis.

Une fois l'assemblage réalisé il n'est alors plus nécessaire de mettre en compression le cadre C avec l'outil 30.

Le positionnement qui vient d'être décrit est particulièrement efficace et rapide. Les pièces ayant été préalablement percées à leur diamètre définitif et ne nécessitant donc plus d'opération de perçage in-situ (dans la structure d'aéronef en cours d'intégration ou d'assemblage) mais uniquement un positionnement relatif des pièces, cela représente un gain de temps non négligeable. Par ailleurs, le fait de ne plus réaliser de perçage in-situ permet d'éviter de générer de la poussière et des copeaux dans un environnement où sont parfois déjà installés des équipements (ex ; équipement électroniques) sensibles à une telle pollution. En outre, cela simplifie les opérations de perçage dans la mesure où les outils et matériels nécessaires pour les réaliser sont souvent volumineux et s'intègrent donc difficilement dans l'environnement de l'aéronef en cours d'intégration ou d'assemblage avec une densité d'équipements souvent élevée.

On notera que toutes les traverses de la partie structurale du plancher de l'aéronef peuvent être positionnées et assemblées sur leur cadre respectif de manière identique soit l'une après l'autre, soit simultanément.

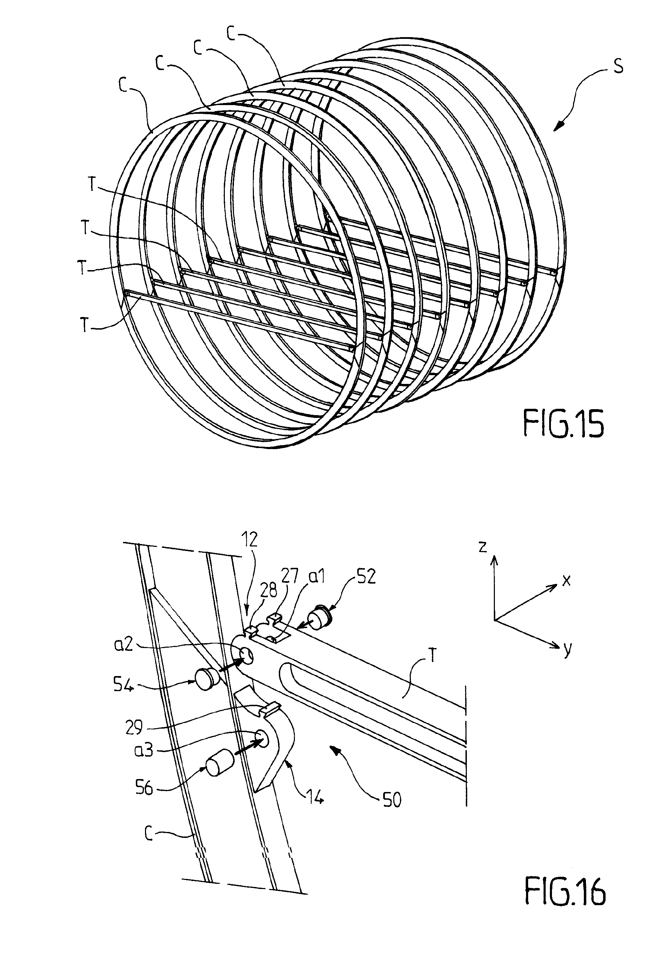

La figure 15 représente schématiquement une structure primaire de fuselage d'aéronef notée S comprenant plusieurs cadres C et plusieurs traverses T qui s'étendent chacune entre deux points de fixation diamétralement opposés sur la périphérie interne de chaque cadre. Les traverses ont été positionnées et assemblées comme décrit ci-dessus.

De manière générale, les éléments/moyens de positionnement du dispositif de positionnement selon le mode de réalisation précité sont de nature uniquement mécanique et ne comportent donc pas de composants électroniques, optiques ou autres, tels qu'une caméra.

Il s'agit d'éléments/moyens mécaniques qui servent de repères géométriques pour aider au positionnement relatif de deux pièces d'aéronef (pas nécessairement celles des figures) mais qui ne participent pas aux fonctionnalités des pièces : les éléments/moyens mécaniques sont des éléments/moyens additionnels par rapport aux pièces et qui ne sont là que pour servir de repères lors du déplacement relatif des deux pièces.

Un et/ou plusieurs de ces éléments/moyens sont associés à l'une et/ou à l'autre des pièces à positionner, de manière permanente ou temporaire.

Un et/ou plusieurs de ces éléments/moyens sont par exemple fixés de manière permanente à l'une et/ou l'autre pièce en étant par exemple réalisés d'un seul tenant avec une pièce (ex : ergots 27, 28) ou rapportés à cette pièce mais non amovibles.

Alternativement, un ou plusieurs de ces éléments/moyens sont fixés de manière temporaire à l'une et/ou à l'autre pièce, constituant ainsi un ou des éléments rapportés et amovibles (ex : éléments 22 et 24).

On notera que ces éléments moyens/moyens de positionnement mécaniques sont disposés latéralement ou de manière décalée par rapport aux alésages : ils ne sont donc pas disposés en vis-à-vis ni même à l'intérieur de l'un et/ou l'autre des alésages.

Les éléments/moyens mécaniques servant de repères géométriques ne nécessitent pas de structure mécanique supplémentaire pour leur maintien en position sur les pièces à positionner ou à côté de celles-ci. Ils constituent donc une solution particulièrement simple à mettre en oeuvre.

Les figures 16 à 19 illustrent un autre mode de réalisation d'un dispositif 50 de positionnement de la première pièce (traverse) T relativement à la deuxième pièce (cadre) C.

Ce dispositif 50 comprend le premier élément de positionnement 22 représenté sur les figures 1, 2 et 6 à 9 qui est utilisé de la même façon (positionnement suivant le premier axe X).

Le dispositif 50 (figure 16) comprend également des moyens de positionnement qui comprennent :
- deux organes actifs (appelés aussi cibles actives) 52, 54 disposés sur la traverse T,
- un organe passif (appelé aussi cible passive) 56 qui est disposé sur le cadre C et qui est apte à coopérer avec les deux organes actifs 52, 54 par transmission et réception d'ondes électromagnétiques.

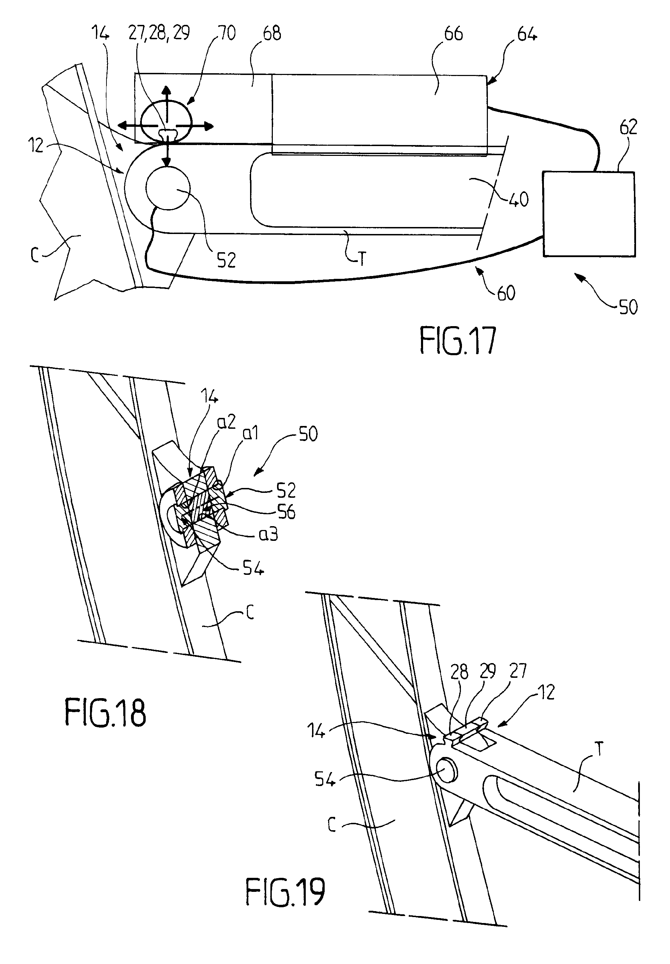

Les organes actifs 52, 54 sont aptes à transmettre des ondes électromagnétiques et l'organe passif 56 est apte à les recevoir. Les organes peuvent être par exemple des cibles magnétiques. Comme représenté à la figure 17, le dispositif 50 comprend également un système de pilotage en boucle fermée 60. Le système 60 est apte à piloter, d'une part, les ondes électromagnétiques transmises par les organes actifs 52, 54 et, d'autre part, en fonction des ondes reçues par l'organe passif 56, le déplacement relatif de la traverse par rapport au cadre de manière à amener en correspondance géométrique les organes actifs et passif. Ces organes peuvent également être considérés comme des éléments servant de repères géométriques (d'un autre type que les éléments purement mécaniques des figures 1 à 15) présents sur les pièces ou associés aux pièces (par exemple de manière temporaire) et que l'on cherche à amener en correspondance géométrique les uns avec les autres.

Le système 60 comprend plus particulièrement une unité de contrôle et de pilotage 62 qui est reliée aux organes actifs et passif, d'une part, et à un outil 64, d'autre part. L'outil 62 peut être intégré à l'outil 64.

L'outil 64 comprend un corps 66 monté de manière verrouillée sur le dessus et sur les deux flancs longitudinaux évidés (ex. : flanc 40) de la traverse comme pour l'outil 30 de la figure 11.

L'outil 64 comprend également une tête 68 fixée à un corps 66 et qui comprend des organes de préhension 70 destinés à être verrouillés sur les repères géométriques (ex. : ergots) 27 à 29 de la traverse et du cadre. Les organes de préhension 70 sont commandables à distance par l'unité 62 :
- pour leur verrouillage/déverrouillage sur les repères géométriques ;
- pour leur déplacement selon les deuxième (Z) et troisième axes (Y) comme indiqué par les flèches sur la figure 17 afin de déplacer l'extrémité libre 12 de la traverse relativement à la partie d'accrochage 14 du cadre.

Tout ce qui a été dit à propos de l'outil 30 de la figure 11 s'applique également ici à l'outil 64. Comme avec l'outil 30, l'outil 64 exerce une traction axiale sur le cadre C (compression du cadre).

On notera que les organes actifs 52, 54 sont, par exemple, réalisés sous la forme de pastilles insérées respectivement dans les alésages a1 et a2 (figure 16) de la chape 12. Il en est de même de l'organe passif 56 inséré dans l'alésage a3 du tenon 14.

Le procédé selon cet autre mode de réalisation de positionnement de la traverse par rapport au cadre débute, comme pour le procédé précédent, un positionnement selon le premier axe X au moyen du premier élément de positionnement 22 (élément de centrage).

Une fois que ce premier positionnement a été effectué, le dispositif 50 décrit ci-dessus est mis en oeuvre afin d'aligner entre eux les ergots 27 à 29 (selon l'axe X) et donc de mettre en correspondance géométrique selon les axes Z et Y les alésages a1, a2, d'une part, et a3, d'autre part.

Plus particulièrement, l'unité de contrôle et de pilotage 62 :
- commande la transmission d'ondes/signaux électromagnétiques par les organes actifs 52, 54,
- reçoit des informations des organes actifs en fonction de la position de l'organe passif 56 par rapport aux organes actifs et, donc, en fonction du retour des signaux émis par les organes actifs et réfléchis par l'organe passif - traite ces informations (et notamment déduit la différence entre les positions respectives des organes actifs et passif en fonction des ondes/signaux reçus), et transmet à l'outil 64 une commande adaptée pour provoquer un déplacement des organes de préhension 70 correspondant à la différence entre les positions ainsi déterminées (déplacement des organes de préhension verrouillés sur la partie 14 par rapport aux organes de préhension verrouillés sur la traverse),
- répète le cycle des étapes précédentes jusqu'à obtenir un alignement des positions des organes actifs et passif qui correspond à une mise en correspondance géométrique des alésages a1, a2 et a3 selon les deux axes Z et Y.

La figure 18 est une vue en coupe montrant l'agencement des organes actifs 52, 54 de part et d'autre de l'organe passif 56 lorsque ces organes ont été mis en place dans leurs logements respectifs (alésages a1, a2, a3) et que leurs positions ont été alignées selon les trois axes géométriques.

La figure 19 illustre le positionnement des deux pièces selon les trois axes géométriques.

Après mise en concordance géométrique des organes actifs et passif, les organes actifs 52, 54 sont retirés, tandis que l'organe passif 56 est chassé lors de la mise en place de la vis 42 de la figure 14.

Cet organe passif peut par exemple constituer un organe sacrificiel.

Dans ce mode de réalisation, le ou les éléments/moyens mécaniques servant de repères géométriques (à l'exception des organes) présentent les mêmes caractéristiques que précédemment. Ils sont associés aux organes actifs et passifs qui eux sont disposés dans les alésages à aligner. Toutefois, les organes actifs et passifs pourraient être disposés à un autre endroit des pièces. Quel que soit l'agencement des organes, ceux-ci s'avèrent particulièrement simples à manipuler et à placer sur les pièces, tout particulièrement lorsqu'ils sont dans les alésages. Ils ne nécessitent pas de structure mécanique de support pour maintien en position sur les pièces. Les avantages et caractéristiques présentés en relation avec le premier mode s'appliquent également ici tant qu'ils n'entrent pas en contradiction avec la présence des organes.

Les modes de réalisation décrits ci-dessus prévoient d'abord un positionnement selon le premier axe X avec le premier élément de positionnement 22, puis, un positionnement selon les deux autres axes Z et Y avec le deuxième élément de positionnement 24 et les repères géométriques 27 à 29.

Selon une première variante non représentée, le positionnement a lieu selon le premier axe avec le premier élément 22 et, lors de ce positionnement, on obtient simultanément le positionnement selon les deux autres axes sans faire intervenir ni le deuxième élément 24 ni les repères géométriques 27 à 29. Le dispositif de positionnement peut ainsi être considérablement simplifié puisque réduit au premier élément 22.

On notera toutefois qu'une deuxième variante non représentée peut reprendre la première variante en ajustant des repères géométriques sur les deux pièces (tels les ergots 27 à 29) afin de contrôler le bon positionnement des pièces.

Selon une troisième variante non représentée, le positionnement relatif des pièces peut n'avoir lieu que suivant les deuxième (Z) et troisième axes (Y) en se passant du premier élément de positionnement 22. Dans ce cas, la traverse est directement enfourchée par sa chape sur le tenon du cadre.

Selon une quatrième variante non représentée, le mode de réalisation illustré aux figures 16 à 19 peut être simplifié en omettant le premier élément de positionnement 22 comme pour la troisième variante.

Selon une cinquième variante non représentée, le nombre des organes actifs et passif, leur emplacement et leur forme peuvent varier. Ces organes peuvent en outre être rapportés sur les pièces après leur construction, de manière amovible ou non, ou bien être intégrés auxdites pièces lors de leur construction.

Selon une sixième variante non représentée, d'autres éléments ou formes aménagés en relief sur l'une et/ou l'autre pièce (traverse, cadre) peuvent être envisagés pour mettre l'une des pièces en référence géométrique par rapport à l'autre pièce.

Selon une septième variante non représentée, la forme, l'emplacement et le nombre des éléments 22, 24 et 27 à 29 peuvent varier tout en assurant chacun la ou les mêmes fonctions. Les éléments ou certains d'entre eux peuvent être amovibles ou non.

Selon une huitième variante non représentée, les emplacements de la chape 12 et du tenon 14 peuvent être inversés : la chape est solidaire du cadre et le tenon est solidaire de la traverse.

Selon une neuvième variante non représentée, la chape et le tenon peuvent être remplacés par d'autres moyens d'accrochage ou d'emboîtement complémentaires permettant d'assurer l'assemblage d'une traverse sur un cadre.

Selon une dixième variante non représentée, un outil est utilisé pour amener en correspondance géométrique suivant un ou plusieurs axes géométriques des repères géométriques présents sur les deux pièces à positionner et qui sont différents des repères identifiés sur les figures décrites ci-dessus.

Selon une onzième variante non représentée, les organes actifs et passifs du mode de réalisation des figures 16 à 19 peuvent être utilisés en combinaison avec un et/ou plusieurs autres éléments de positionnement mécaniques qui ne sont pas nécessairement la cale 22 ou les ergots 27 à 29.

On notera que les deux pièces à positionner l'une par rapport à l'autre peuvent être d'autres pièces d'un aéronef et tant ce qui a été dit précédemment notamment, en termes de caractéristiques, de fonctionnalités et d'avantages s'applique également au positionnement d'autres pièces d'aéronef. L'une et/ou l'autre de ces pièces peuvent être mobiles pendant au moins une partie de la durée de mise en oeuvre du procédé de positionnement d'une pièce par rapport à l'autre.

De manière générale, l'un et/ou l'autre des modes de réalisation et variantes précités s'appliquent au positionnement d'autre pièces d'aéronef soit en ayant recours à un ou des éléments servant de repères géométriques purement mécaniques soit en combinant un tel ou de tels éléments à des organes actifs et passifs (en complément), tels que mentionnés précédemment dans le mode des figures 16 à 19 et/ou dans ses variantes. La forme, le nombre, l'emplacement du ou des éléments servant de repères géométriques et des organes actifs et passifs relativement aux pièces à positionner et à assembler peut varier par rapport à ce qui a été dit précédemment.

## Revendications

1. Ensemble comprenant une première pièce d'aéronef (T) et une deuxième pièce d'aéronef (C) et un dispositif (20) de positionnement de la première pièce relativement à la deuxième pièce, la première pièce comportant une extrémité libre (12) pourvue d'au moins un premier alésage (a1,a2) et la deuxième pièce comportant une partie d'accrochage (14) pourvue d'au moins un deuxième alésage (a3) destiné à venir en correspondance avec ledit au moins un premier alésage, **caractérisé en ce que** , le dispositif (20) comporte au moins un élément de positionnement mécanique (22, 24, 27-29) servant de repère géométrique lors d'un déplacement relatif desdits au moins un premier et deuxième alésages percés à leurs diamètres définitifs afin de positionner, suivant au moins un parmi un premier, un deuxième et un troisième axes géométriques, ledit au moins un premier alésage relativement audit au moins un deuxième alésage.

2. Ensemble selon la revendication 1, **caractérisé en ce que** ledit au moins un élément de positionnement est associé de manière permanente ou temporaire à l'une des première et deuxième pièces.

3. Ensemble selon la revendication 1 ou 2, **caractérisé en ce que** ledit au moins un élément de positionnement ne participe pas aux fonctionnalités des première et deuxième pièces.

4. Ensemble selon l'une des revendications 1 à 3, **caractérisé en ce que** ledit au moins un élément de positionnement n'est pas disposé en vis-à-vis ou à l'intérieur desdits au moins un premier et deuxième alésages.

5. Ensemble selon l'une des revendications 1 à 4, **caractérisé en ce que** ledit au moins un élément de positionnement comprend un élément de centrage (22) suivant le premier axe (X) de la première pièce relativement à la deuxième pièce.

6. Ensemble selon l'une des revendications 1 à 5, **caractérisé en ce que** ledit au moins un élément de positionnement (24) comprend un élément de centrage suivant le deuxième axe géométrique (Z) dudit au moins un premier alésage relativement audit au moins un deuxième alésage.

7. Ensemble selon l'une des revendications 1 à 6, en ce qu'il comprend un outil de positionnement de la première pièce relativement à la deuxième pièce.

8. Ensemble selon la revendication 7, **caractérisé en ce que** l'outil de positionnement comprend des premiers organes de préhension qui sont aptes à être verrouillés sur l'une des pièces, des deuxièmes organes de préhension qui sont aptes à être verrouillés sur l'autre pièce, lesdits premiers organes de préhension étant aptes à se déplacer relativement auxdits deuxièmes organes de préhension suivant ledit au moins un axe géométrique.

9. Ensemble selon l'une des revendications 1 à 8, **caractérisé en ce que** ledit au moins un élément de positionnement comprend plusieurs éléments servant de repères géométriques (27-29) disposés sur la première pièce et sur la deuxième pièce et qui sont destinés à être alignés les uns avec les autres suivant le deuxième axe géométrique (Z) et/ou le troisième axe géométrique (Y).

10. Ensemble selon l'une des revendications 1 à 9, **caractérisé en ce que** le dispositif de positionnement comprend en outre :
- au moins un organe actif (52, 54) disposé sur une pièce (T),
- au moins un organe passif (56) disposé sur l'autre pièce (C) et qui est apte à coopérer avec ledit au moins un organe actif par transmission et réception d'ondes électromagnétiques,
- un système (50) de pilotage en boucle fermée qui est apte à piloter les ondes électromagnétiques transmises et le déplacement d'au moins une pièce par rapport à l'autre en fonction des ondes reçues par ledit au moins un organe passif de manière à amener en correspondance géométrique lesdits au moins un organe actif et passif.

11. Ensemble selon la revendication 10, **caractérisé en ce que** le dispositif de positionnement comprend plusieurs éléments servant de repères géométriques disposés sur la première pièce et sur la deuxième pièce et qui sont destinés à être alignés les uns avec les autres suivant le premier axe géométrique (X) et/ou le deuxième axe géométrique (Z) et/ou le troisième axe géométrique (Y).

12. Ensemble selon l'une des revendications 1 à 11, **caractérisé en ce que** la première pièce est une traverse (T) et la deuxième pièce est un cadre (C).

13. Ensemble selon la revendication 12, **caractérisé en ce que** la traverse est destinée à être fixée en deux points diamétralement opposés de la périphérie interne du cadre respectivement par l'intermédiaire de ses deux extrémités opposées (12, 17) dont l'une (12) est l'extrémité libre non encore fixée de la traverse et l'autre (17) est l'extrémité opposée déjà fixée en un point du cadre.

14. Aéronef, **caractérisé en ce qu'**il comprend au moins un ensemble selon l'une des revendications 1 à 13.

15. Procédé de positionnement d'une première pièce d'aéronef (T) relativement à une deuxième pièce d'aéronef (C), la première pièce comportant une extrémité libre (12) pourvue d'au moins un premier alésage (a1, a2) et la deuxième pièce comportant une partie d'accrochage (14) pourvue d'au moins un deuxième alésage (a3) destiné à venir en correspondance avec ledit au moins un premier alésage, **caractérisé en ce que** ledit au moins un premier alésage et ledit au moins un deuxième alésage sont percés à leur diamètre définitif préalablement à leur positionnement relatif, le procédé comprenant une étape de déplacement relatif desdits au moins un premier et deuxième alésages et de positionnement, suivant au moins un des trois axes géométriques, dudit au moins un premier alésage relativement audit au moins un deuxième alésage par l'intermédiaire d'au moins un élément de positionnement mécanique (22, 24, 27-29) qui sert de repère géométrique entre lesdits au moins un premier et deuxième alésages lors du déplacement relatif.
